# EUROPEAN PATENT APPLICATION

(11) **EP 4 764 226 A1**
(43) Date of publication of application: **24.06.2026**
(21) Application number: 24879054.5
(22) Date of filing: 16.10.2024
(51) Int. Cl.: F04D 29/70, F04D 25/08, H02K 7/14

(54) **FAN BLADE HAVING DUSTPROOF STRUCTURE AND FAN**

(30) Priority: 17.10.2023 CN 202311344321
(71) Applicant: GUANGDONG SHENGHUI TECHNOLOGY CO., LTD., Zhaoqing, Guangdong 526108 (CN)
(72) Inventor: HUANG, Guangao, Zhaoqing, Guangdong 526108 (CN); OU, Fuyuan, Zhaoqing, Guangdong 526108 (CN); WEN, Guangran, Zhaoqing, Guangdong 526108 (CN); YAN, Shichang, Zhaoqing, Guangdong 526108 (CN)
(74) Representative: Bryn Aarflot AS
(86) International application number: PCT/CN2024/125356
(87) International publication number: WO 2025/082413

(57) **Abstract**

Embodiments of the present invention provide a fan blade having a dustproof structure and a fan. The fan blade having the dustproof structure comprises a hub and first blades, a mounting hole for mounting a shaft core is formed in the middle of the inner side of the hub, and dustproof blades are arranged around an opening of the mounting hole, and the bending direction of the dustproof blades is opposite to that of the first blades. According to the fan blade in the embodiments, the dustproof blades are arranged around the mounting hole in the inner side of the hub, and as the bending direction of the dustproof blades is opposite to that of the first blades, when the fan blade rotates, the dustproof blades can adjust the direction of airflow in the hub, thereby effectively preventing dust and other impurities from being adsorbed at the connection position of the shaft core and the fan blades when the fan works.

## Description

### CROSS REFERENCE TO RELATED APPLICATION

The present invention claims the priority to the Chinese patent application with the filing No. 202311344321.9 filed with the Chinese Patent Office on October 17, 2023, and entitled "FAN BLADE WITH DUST-PROOF STRUCTURE, AND FAN", which is incorporated herein by reference in entirety.

### TECHNICAL FIELD

The present invention relates to the field of fans, and in particular, to a fan blade with a dust-proof structure and a fan.

### BACKGROUND ART

In a fan of the prior art, a bearing is arranged between a middle tube and a shaft core. The shaft core is mounted on a hub of a fan blade through a mounting hole. During the rotation of the fan, dust or impurities in the air may enter the fan with the airflow and be adsorbed at the connection between the shaft core and the mounting hole. The amount of adsorbed dust and impurities gradually increases as the fan operates, and then transfers to the bearing, causing foreign matter to enter the bearing, which can subsequently lead to problems such as fan stalling, increased noise, and shortened service life.

### SUMMARY

An objective of the present invention includes, for example, providing a fan blade with a dust-proof structure, and a fan, which can change the airflow direction, thereby helping to solve the problem that the connection between the shaft core and the fan blade is prone to dust adsorption.

Embodiments of the present invention can be implemented as follows.

In a first aspect, the present invention provides a fan blade with a dust-proof structure, including a hub and first blades, wherein a mounting hole for mounting a shaft core is provided in a middle portion of an inner side of the hub, dust-proof blades are provided around an orifice of the mounting hole, and a bending direction of the dust-proof blades is opposite to a bending direction of the first blades.

In an optional embodiment, a reinforcing ring coaxial with the mounting hole is provided at the orifice of the mounting hole, and two or more dust-proof blades are sequentially arranged along a circumferential direction of the reinforcing ring.

In an optional embodiment, the reinforcing ring, the dust-proof blades, and the hub are integrally formed.

In an optional embodiment, the first blades are forward-curved blades, and the dust-proof blades are configured as backward-curved blades.

In an optional embodiment, the first blades are backward-curved blades, and the dust-proof blades are configured as forward-curved blades.

In an optional embodiment, roots of the dust-proof blades are fixed to the reinforcing ring, and the dust-proof blades are attached to and disposed against the inner side of the hub.

In an optional embodiment, a material of the dust-proof blades is the same as or different from a material of the first blades.

In an optional embodiment, the number of the dust-proof blades is the same as or different from the number of the first blades.

In a second aspect, the present invention provides a fan, including the fan blade with the dust-proof structure according to any one of the preceding embodiments.

In an optional embodiment, the fan further includes a shaft core, a bracket, and a bobbin, wherein the shaft core is mounted in the mounting hole, a middle tube portion is provided on the bracket, the shaft core and the middle tube portion are connected via a bearing, and the bobbin is sleeved on an outer side of the middle tube portion.

In an optional embodiment, one side of the bobbin close to the fan blade is provided with an upper cover plate, a through hole coaxial with the shaft core is provided in a middle portion of the upper cover plate, and the dust-proof blades partially extend into the through hole.

In an optional embodiment, a difference between a radius of the through hole and a distance from a tip end of the dust-proof blade to an axis of the shaft core is less than 0.85 mm, preferably 0.75-0.85 mm.

In an optional embodiment, a distance, along an axial direction of the shaft core, of the portion of the dust-proof blade extending into the through hole is 0.7-0.9 mm.

In an optional embodiment, the bobbin includes a shaft sleeve and a winding portion, a limiting member is provided on an outer wall of the shaft sleeve close to the fan blade, and a limiting protrusion extending into an inner side of the middle tube portion is provided on the limiting member.

In an optional embodiment, a PCBA is welded to a bottom of the bobbin, a magnetic strip is provided outside the bobbin, a motor housing is provided outside the magnetic strip, and the motor housing is fixed in the hub.

In an optional embodiment, a length of a part of a same dust-proof blade located on one side of the upper cover plate close to the bracket is shorter than a length of a part thereof located on one side close to the fan blade.

In an optional embodiment, a damping pad is provided on the bracket.

In an optional embodiment, one end of the shaft core extending into the middle tube portion is provided with a gasket, a retaining ring, an elastic sheet, a strong magnet, and an iron shell.

In an optional embodiment, a winding is provided on the bobbin.

In an optional embodiment, the bearing is a hydraulic bearing.

The beneficial effects of the embodiments of the present invention are as follows.

In the present invention, the fan blade is provided with dust-proof blades around the mounting hole on the inner side of the hub of the fan blade. Since the bending direction of the dust-proof blades is opposite to that of the first blades, when the fan blade rotates, the dust-proof blades can adjust the direction of airflow within the hub, effectively solving the problem of impurities such as dust being adsorbed at the connection between the shaft core and the fan blade during fan operation.

### BRIEF DESCRIPTION OF DRAWINGS

To explain the technical solutions of the embodiments of the present invention more clearly, the drawings required for describing the embodiments will be briefly introduced below. It should be understood that the following drawings only show some embodiments of the present invention and thus should not be considered as limiting the scope. For those of ordinary skill in the art, other related drawings can be derived from these drawings without inventive efforts.
FIG. 1 is a schematic structural diagram of a fan blade in the prior art;
FIG. 2 is a schematic structural diagram of a fan blade in the present invention;
FIG. 3 is an enlarged view of portion A of FIG. 2;
FIG. 4 is a simulation diagram of a fan provided with the fan blade shown in FIG. 1;
FIG. 5 is a simulation diagram of a fan provided with the fan blade shown in FIG. 2;
FIG. 6 is a schematic structural diagram of a fan in the present invention; and
FIG. 7 is an enlarged view of portion B of FIG. 6.

Reference numerals: 1, fan blade; 101, hub; 102, mounting hole; 103, reinforcing ring; 104, dust-proof blade; 2, bracket; 3, damping pad; 4, motor housing; 5, magnetic strip; 6, winding; 7, PCBA; 8, bobbin; 801, upper cover plate; 802, limiting member; 9, bearing; 10, gasket; 11, retaining ring; 12, elastic sheet; 13, strong magnet; 14, iron shell.

### DETAILED DESCRIPTION OF EMBODIMENTS

To make the objectives, technical solutions, and advantages of the embodiments of the present invention clearer, the technical solutions in the embodiments of the present invention will be described clearly and completely below with reference to the drawings in the embodiments of the present invention. Obviously, the described embodiments are some, but not all, of the embodiments of the present invention. The components of the embodiments of the present invention generally described and illustrated in the drawings herein can be arranged and designed in a variety of different configurations.

Thus, the following detailed description of the embodiments of the present invention provided in the drawings is not intended to limit the scope of the claimed disclosure, but merely represents selected embodiments of the present invention. Based on the embodiments in the present invention, all other embodiments obtained by a person of ordinary skill in the art without making inventive efforts shall fall within the protection scope of the present invention.

It should be noted that similar reference numerals and letters denote similar items in the following drawings, so that once an item is defined in one drawing, it does not need to be further defined or explained in subsequent drawings.

In the description of the present invention, it should be noted that if terms such as "upper", "lower", "inner", and "outer" indicating orientation or positional relationships are used, they are based on the orientation or positional relationships shown in the drawings, or the orientation or positional relationships conventionally used when the product of the invention is placed. They are only for the convenience of describing the present invention and simplifying the description, and do not indicate or imply that the referred device or element must have a specific orientation, be constructed and operated in a specific orientation, and therefore cannot be construed as limiting the present invention.

Furthermore, if terms such as "first" and "second" appear, they are only used for distinguishing descriptions and cannot be understood as indicating or implying relative importance.

It should be noted that, in the absence of conflict, features in the embodiments of the present invention can be combined with each other.

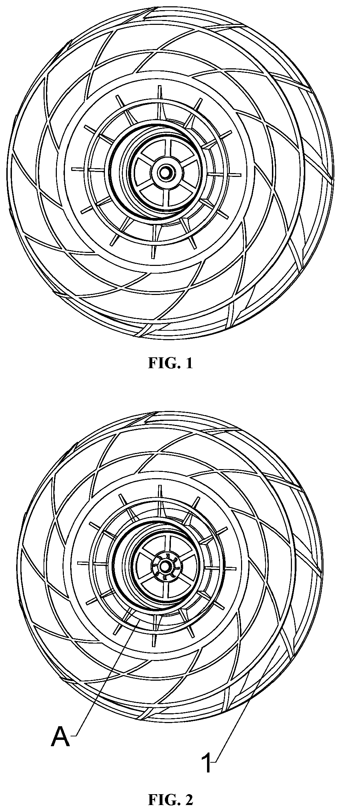

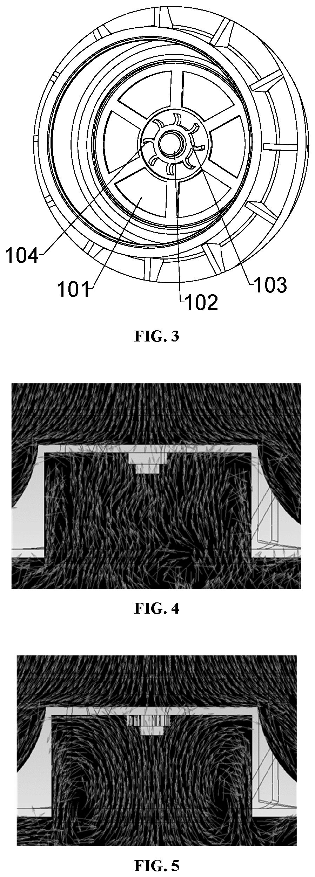

This embodiment provides a fan blade with a dust-proof structure. As shown in FIG. 2 and FIG. 3, the fan blade includes a hub 101 and first blades. A mounting hole 102 for mounting a shaft core is provided in a middle portion of an inner side of the hub 101. Dust-proof blades 104 are provided around an orifice of the mounting hole 102, and a bending direction of the dust-proof blades 104 is opposite to a bending direction of the first blades.

The fan blade 1 in this embodiment is provided with dust-proof blades 104 around the mounting hole 102 on the inner side of the hub 101. Since the bending direction of the dust-proof blades 104 is opposite to that of the first blades, when the fan blade 1 rotates, the dust-proof blades 104 can adjust the direction of airflow within the hub 101, effectively solving the problem of impurities such as dust being adsorbed at the connection between the shaft core and the fan blade 1 during fan operation.

The bending direction of the dust-proof blades 104 in this embodiment is opposite to the bending direction of the first blade. For example, when the first blade is a forward-curved blade, the dust-proof blades 104 are configured as backward-curved blades; or when the first blade is a backward-curved blade, the dust-proof blades 104 are configured as forward-curved blades. When the bending direction of the dust-proof blades 104 is the same as the bending direction of the first blade, the disturbance direction of the dust-proof blades 104 on the airflow is the same as that of the first blade. In this case, the flow direction of the gas cannot be changed, i.e., the problem of impurities such as dust being adsorbed at the connection between the shaft core and the fan blade 1 during fan operation cannot be effectively prevented.

The material of the dust-proof blades 104 in this embodiment can be the same as or different from the material of the first blades. Typically, a material with a certain hardness is selected to avoid deformation of overly soft dust-proof blades 104, which may lead to ineffective or poor adjustment of the airflow direction.

Other structures and materials of the fan blade 1 in this embodiment, except for the hub 101, can be referred to the prior art.

In an optional embodiment, the orifice of the mounting hole 102 is provided with a reinforcing ring coaxial with the mounting hole 102, and two or more dust-proof blades 104 are sequentially arranged along a circumferential direction of the reinforcing ring.

In this embodiment, the reinforcing ring is arranged coaxially with the mounting hole 102, with the middle portion for the shaft core to pass through. The roots of the dust-proof blades 104 are connected to the reinforcing ring. The reinforcing ring, on one hand, facilitates the fixation of the blades, and on the other hand, can provide more stable support for the shaft core.

In this embodiment, the roots of the dust-proof blades 104 are fixed to the reinforcing ring. The dust-proof blades 104 can be attached to and disposed against the inner side of the hub 101, or can have a slight gap with the inner side of the hub 101. However, a gap between the inner side of the hub 101 and the dust-proof blades 104 would also absorb dust, so preferably, the dust-proof blades 104 are attached to and disposed against the inner side of the hub 101.

In this embodiment, the number of dust-proof blades 104 can be selected according to the actual situation, for example, it can be 4 to 10, or it can be the same as the number of the first blades.

In an optional embodiment, the reinforcing ring 103, the dust-proof blades 104, and the hub 101 are integrally formed. This facilitates processing, reduces assembly steps, and also reduces assembly gaps, thereby reducing dead corners for dust accumulation. There is no specific requirement for the materials of the reinforcing ring 103, the dust-proof blades 104, and the hub 101, and they can be the same as the material of the first fan blade 1.

The present invention conducts simulation analysis on a conventional fan blade 1 in the prior art and the fan blade 1 provided in this embodiment. The structure of the conventional fan blade 1 in the prior art is shown in FIG. 1, and the structure of the fan blade 1 in this embodiment is shown in FIG. 2 and FIG. 3. The fan blade is imported into ANSYS software for preprocessing, then a simulation test is performed, and finally, the results are output to examine the flow field. The airflow directions obtained by simulation when the fan blade 1 rotates are shown in FIG. 4 and FIG. 5, respectively. It can be seen from FIG. 4 and FIG. 5 that in the fan blade 1 of the prior art, since no dust-proof blades 104 are provided, all the airflow flows toward the root of the shaft core, making the connection between the shaft core and the fan blade 1 prone to adsorption of fine particles such as dust at this time. In this embodiment, with the addition of the dust-proof blades 104, the improved airflow is clearly dispersed to both sides of the shaft core root. The dispersed airflow can carry away fine particles such as dust, thereby reducing the adsorption of fine particles at the connection between the shaft core and the fan blade 1.

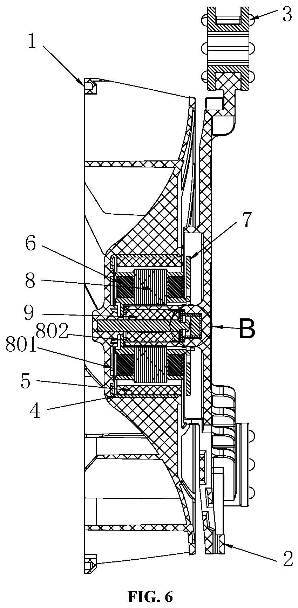

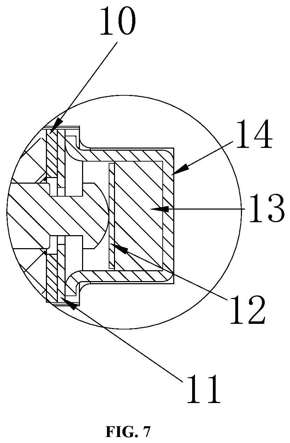

Another embodiment of the present invention provides a fan. As shown in FIG. 6 and FIG. 7, the fan includes the fan blade with the dust-proof structure according to any one of the preceding embodiments.

Since other structures and materials of the fan blade with the dust-proof structure according to any one of the preceding embodiments, except for the dust-proof fan blade 1 and the reinforcing ring, can be referred to the prior art, it can generally be used as a substitution for the conventional fan blade 1 in the prior art. It can be directly used in existing fans, has a wide range of applications, and does not affect the structural dimensions of other fan components.

In an optional embodiment, the fan further includes a shaft core, a bracket 2, and a bobbin 8. The shaft core is mounted in the mounting hole 102. A middle tube portion is provided on the bracket 2. The shaft core and the middle tube portion are connected via a bearing 9. The bobbin 8 is sleeved on an outer side of the middle tube portion.

Specifically, in this embodiment, the bracket 2 can be provided with a damping pad 3. The middle tube portion of the bracket 2 is connected to the shaft core via the bearing 9. One end of the shaft core extending into the middle tube portion is provided with a gasket 10, a retaining ring 11, an elastic sheet 12, a strong magnet 13, and an iron shell 14, so that the shaft core is rotatably mounted in the middle tube and the bearing 9 is limited. The bobbin 8 is provided on the outside of the middle tube, and the bobbin 8 is provided with a winding 6. In some embodiments, the bearing 9 can be a hydraulic bearing 9.

In an optional embodiment, one side of the bobbin 8 close to the fan blade 1 is provided with an upper cover plate 801. A through hole coaxial with the shaft core is provided in a middle portion of the upper cover plate 801. The dust-proof blades 104 partially extend into the through hole.

The presence of the upper cover plate 801 allows for better cooperation with the dust-proof blades 104. As the fan blade 1 rotates, the airflow gradually moves along the gap on one side of the bobbin 8 close to the axis toward the dust-proof blades 104. Then, under the action of the dust-proof blades 104, the airflow direction is changed, causing the airflow to move along the hub 101 away from the axis of the shaft core. Then, the airflow moves along the gap on the outer side of the bobbin 8 away from the dust-proof blades 104, carrying away fine particles such as dust during the movement.

Without the cooperation of the upper cover plate 801, as the fan blade 1 rotates, the airflow gradually moves along the gap on one side of the bobbin 8 close to the axis toward the dust-proof blades 104. Then, under the action of the dust-proof blades 104, part of the airflow moves along the hub 101 away from the axis of the shaft core, and another part of the airflow moves directly away from the hub 101. The airflow direction is similar to that when the dust-proof blades 104 are not provided, except that due to the presence of the dust-proof blades 104, the airflow reverses and flows out before impacting the hub 101. The airflow dispersed to both sides of the shaft core root is weakened, and the ability to carry away fine particles is reduced, resulting in a relatively weak effect of reducing particle adsorption at the shaft core root.

In this embodiment, the dust-proof blades 104 partially extend into the through hole. By adjusting the extension depth and the gap with the through hole, the airflow can be dispersed to both sides of the shaft core root as much as possible, reducing dust adsorption at the shaft core root. In some embodiments of the present invention, the lengths (radial lengths relative to the shaft core) of the plurality of dust-proof blades 104 can be the same or different. In some embodiments, a length of a part of a same dust-proof blade 104 located on one side of the upper cover close to the bracket is shorter than a length of a part thereof located on one side close to the fan blade. In some embodiments, it is gradually shortened, so that the intensity of the airflow dispersed to both sides between the fan blade and the upper cover plate is greater.

In an optional embodiment, a difference between a radius of the through hole and a distance from a tip end of the dust-proof blade 104 to an axis of the shaft core is less than 0.85 mm, preferably 0.75-0.85 mm.

Theoretically, the smaller the difference between the radius of the through hole and the distance from the tip end of the dust-proof blade 104 to the axis of the shaft core is, the better it is. However, vibration can occur during actual fan operation. If the above difference is too small, the dust-proof blades 104 and the upper cover plate 801 may interfere with each other during rotation. Therefore, the above difference is preferably 0.75-0.85 mm, for example, 0.8 mm.

In an optional embodiment, a distance, along an axial direction of the shaft core, of the portion of the dust-proof blade 104 extending into the through hole is 0.7-0.9 mm, preferably 0.8 mm.

In an optional embodiment, the bobbin 8 includes a shaft sleeve and a winding portion. A limiting member 802 is provided on an outer wall of the shaft sleeve close to the fan blade 1. A limiting protrusion extending into an inner side of the middle tube portion is provided on the limiting member 802.

The bearing 9 in the present invention can be limited by conventional structures such as a retaining ring. Furthermore, in this embodiment, the cooperation of the limiting member 802 with the limiting protrusion facilitates the stable mounting of the bobbin 8.

In an optional embodiment, a PCBA 7 is welded to a bottom of the bobbin 8. A magnetic strip 5 is provided outside the bobbin 8. A motor housing 4 is provided outside the magnetic strip 5, and the motor housing 4 is fixed in the hub 101. During operation, the airflow can flow out from the gap between the bobbin 8 and the magnetic strip 5.

The foregoing is merely specific embodiments of the present invention, but the protection scope of the present invention is not limited thereto. Any variations or substitutions that can be easily conceived by a person skilled in the art within the technical scope disclosed in the present invention shall fall within the protection scope of the present invention. Therefore, the protection scope of the present invention shall be subject to the protection scope of the claims.

### INDUSTRIAL APPLICABILITY

The fan blade with a dust-proof structure provided by the present invention is provided with dust-proof blades around the mounting hole on the inner side of the hub. Since the bending direction of the dust-proof blades is opposite to that of the first blades, when the fan blade rotates, the dust-proof blades can adjust the direction of airflow within the hub, effectively solving the problem of impurities such as dust being adsorbed at the connection between the shaft core and the fan blade during fan operation.

The fan blade with a dust-proof structure and the fan provided by the present invention are reproducible and can be applied in various technical fields. For example, the fan blade with a dust-proof structure and the fan provided by the present invention can be used in the field of fans.

## Claims

1. A fan blade with a dust-proof structure, comprising a hub and first blades, wherein a mounting hole for mounting a shaft core is provided in a middle portion of an inner side of the hub, **characterized in that** dust-proof blades are provided around an orifice of the mounting hole, and a bending direction of the dust-proof blades is opposite to a bending direction of the first blades.

2. The fan blade with the dust-proof structure according to claim 1, wherein a reinforcing ring coaxial with the mounting hole is provided at the orifice of the mounting hole, and two or more dust-proof blades are sequentially arranged along a circumferential direction of the reinforcing ring.

3. The fan blade with the dust-proof structure according to claim 1 or 2, wherein the reinforcing ring, the dust-proof blades, and the hub are integrally formed.

4. The fan blade with the dust-proof structure according to any one of claims 1 to 3, wherein the first blades are forward-curved blades, and the dust-proof blades are configured as backward-curved blades.

5. The fan blade with the dust-proof structure according to any one of claims 1 to 3, wherein the first blades are backward-curved blades, and the dust-proof blades are configured as forward-curved blades.

6. The fan blade with the dust-proof structure according to any one of claims 2 to 5, wherein roots of the dust-proof blades are fixed to the reinforcing ring, and the dust-proof blades are attached to and disposed against the inner side of the hub.

7. The fan blade with the dust-proof structure according to any one of claims 1 to 6, wherein a material of the dust-proof blades is the same as or different from a material of the first blades.

8. The fan blade with the dust-proof structure according to any one of claims 1 to 7, wherein the number of the dust-proof blades is the same as or different from the number of the first blades.

9. A fan, **characterized by** comprising the fan blade with the dust-proof structure according to any one of claims 1 to 8.

10. The fan according to claim 9, further comprising a shaft core, a bracket, and a bobbin, wherein the shaft core is mounted in the mounting hole, a middle tube portion is provided on the bracket, the shaft core and the middle tube portion are connected via a bearing, and the bobbin is sleeved on an outer side of the middle tube portion.

11. The fan according to claim 10, wherein one side of the bobbin close to the fan blade is provided with an upper cover plate, a through hole coaxial with the shaft core is provided in a middle portion of the upper cover plate, and the dust-proof blades partially extend into the through hole.

12. The fan according to claim 11, wherein a difference between a radius of the through hole and a distance from a tip end of the dust-proof blades to an axis of the shaft core is less than 0.85 mm, preferably 0.75-0.85 mm.

13. The fan according to claim 11 or 12, wherein a distance, along an axial direction of the shaft core, of a portion of the dust-proof blades extending into the through hole is 0.7-0.9 mm, preferably 0.8 mm.

14. The fan according to any one of claims 10 to 13, wherein the bobbin comprises a shaft sleeve and a winding portion, a limiting member is provided on an outer wall of the shaft sleeve close to the fan blade, and a limiting protrusion extending into an inner side of the middle tube portion is provided on the limiting member.

15. The fan according to any one of claims 10 to 14, wherein a PCBA is welded to a bottom of the bobbin, a magnetic strip is provided outside the bobbin, a motor housing is provided outside the magnetic strip, and the motor housing is fixed in the hub.

16. The fan according to any one of claims 10 to 15, wherein a length of a part of a same dust-proof blade located on one side of the upper cover plate close to the bracket is shorter than a length of a part of the same dust-proof blade located on one side close to the fan blade.

17. The fan according to any one of claims 10 to 16, wherein a damping pad is provided on the bracket.

18. The fan according to any one of claims 10 to 17, wherein one end of the shaft core extending into the middle tube portion is provided with a gasket, a retaining ring, an elastic sheet, a strong magnet, and an iron shell.

19. The fan according to any one of claims 10 to 18, wherein a winding is provided on the bobbin.

20. The fan according to any one of claims 10 to 19, wherein the bearing is a hydraulic bearing.
